# EUROPEAN PATENT SPECIFICATION

(11) **EP 2 064 155 B1**
(45) Date of publication and mention of the grant of the patent: **01.04.2015**
(21) Application number: 07804310.6
(22) Date of filing: 19.09.2007
(51) Int. Cl.: B08B 9/027, B08B 17/02, C02F 1/48, F16L 9/12, F16L 11/127

(54) **FLUID CONVEYING CONDUIT AND METHOD FOR PREVENTING FLUID CONTAMINATION**
FLUIDBEFÖRDERUNGSLEITUNG UND VERFAHREN ZUR VERHINDERUNG VON FLUIDVERUNREINIGUNG
CONDUITE DE TRANSPORT DE FLUIDE ET MÉTHODE DE PROTECTION POUR LA CONDUITE

(30) Priority: 20.09.2006 GB 0618453
(43) Date of publication of application: 03.06.2009
(73) Proprietor: Cambridge Scientific Solutions Limited, Oakham, Rutland LE15 9AY (GB)
(72) Inventor: LEE, Ian, Lincolnshire PE9 2QB (GB)
(74) Representative: Raynor, Simon Mark
(86) International application number: PCT/GB2007/003525
(87) International publication number: WO 2008/035051

(56) References cited:
- EP-A- 0 707 169
- WO-A-2006/024714
- WO-A1-94/07790
- DE-A1- 2 325 227
- DE-A1- 10 160 060
- DE-U1-202005 016 324
- GB-A- 2 367 106
- US-A- 4 789 007
- US-A- 6 145 542
- US-A1- 2005 121 094

## Description

The present invention relates to a fluid conveying conduit, such as a water pipe or beer line, and in particular to a fluid conveying conduit including an integral coil for producing a magnetic field to prevent deposition of contaminants within the conduit.

Fluid conveying conduits, such as water pipes, beer lines, gas pipes or the like are commonly used to transport liquids from a supply point to a distribution point. For conduits which convey consumable liquids, regulatory requirements dictate that the liquid is transported by the conduit with a minimum of contamination to the liquid.

Water pipes frequently experience build up of limescale, and deposition of particulates present in the water. In the case of beer lines, yeast and other contaminates build up within the pipes, resulting in contamination of the beer. Similarly, oil pipes experience sludge and bacteria build up resulting in corrosion of the pipe.

Once contaminants have deposited within a pipe, the pipe must then either be cleaned, or possibly replaced. Beer lines are frequently cleaned to remove contaminants. However, the cleaning of beer lines incurs significant costs, in terms of the equipment and chemicals required to clean the lines, down time, and the loss of beer within the lines, which must be discarded when the lines are cleaned.

UK Patent Number GB2,367,106 describes a system for cleaning beer lines, comprising an electro-magnetic coil wrapped round the beer line, and a signal generator for causing the coil to produce a magnetic field. This system prevents contaminants from depositing on the inner surface of the beer lines, and therefore significantly reduces the frequency with which the lines needed to be cleaned.

However, it has been found that in day to day operation, coils wrapped around the beer lines are prone to damage, as well as movement relative to the beer lines, which can effect the performance of the coil. The application of such a system to water pipes may also lead to coil damage. In addition, providing a coil wrapped around the external surface of a water pipe is not always suitable for the environment in which such pipes are utilised.

DE 202005016324 describes a pipe including an electrical coil operable to heat liquid conveyed by the pipe to prevent damage due to freezing of the liquid, or to otherwise maintain the liquid at an optimum desired temperature. However, the pipe of DE 202005016324 does not include any means of cleaning the pipe by preventing deposition of matter carried by the liquid.

US 6,145,542 describes an electrically operated device for treating the hardness of water, comprising an aerial wrapped externally around a pipe and a generator generating a radio frequency waveform.

WO 94/07790 A describes an apparatus and a method for preventing contaminant build-up in beer supply lines including a coil supported on a former located coaxially about the beer line, and a signal generator supplying a varying frequency signal to the coil, according to the preambles of claim 1 and 4.

It is therefore desirable to provide an improved fluid conveying conduit, which addresses the above described problems, and/or which offers improvements generally.

According to the present invention, there is provided a fluid conveying conduit, as claimed in the accompanying claim 1. According to the present invention, there is also provided a method of preventing contamination of a fluid conveying conduit as described in the accompanying claim 4.

In an embodiment of the present invention, there is provided a fluid conveying conduit comprising a tube having a tube wall, an inner surface and an outer surface, the inner surface defining a fluid conveying channel. A coil is located within the tube intermediate the inner surface and outer surface, along at least a section of the length of the tube. The coil includes a plurality of electrical connections, and at least a section of the coil extends around the fluid channel. The fluid conveying conduit further comprises contamination deposition prevention means. The contamination deposition prevention means comprises said coil, which is operable to generate a magnetic field to prevent deposition of contaminants on the inner surface of the tube from fluid conveyed by the tube.

Locating a coil within the tube, between the inner and outer surfaces, provides a cleaning effect which is maximised because the coil is located close to the inner surface and hence to the fluid conveyed within the tube. In addition, locating the coil within between the inner and outer surfaces of the tube protects the coil from damage.

The tube comprises a tube wall, and at least a section of the coil is encased within the tube wall along at least a section of the length of the tube.

The at least a section of the length of the tube, and the at least a section of the coil are integral. This section of the tube is formed about the at least a section of the coil. The coil may be a helical coil.

The fluid conveying conduit further comprises a signal generator, connected to the coil, for providing an electric signal to the coil, to cause the coil to produce the magnetic field.

The signal generator may provide a pulsed or varying energy signal to the coil, the signal having varying frequencies. The pulsed or varying energy input signal may comprise a square waveform having varying frequencies.

The present invention will now be described by way of example only, with reference to the following illustrative figures in which:
Figure 1 shows a longitudinal cross sectional view of a conduit according to an embodiment of the present invention;
Figure 2 is a transverse section view of the conduit of Figure 1;

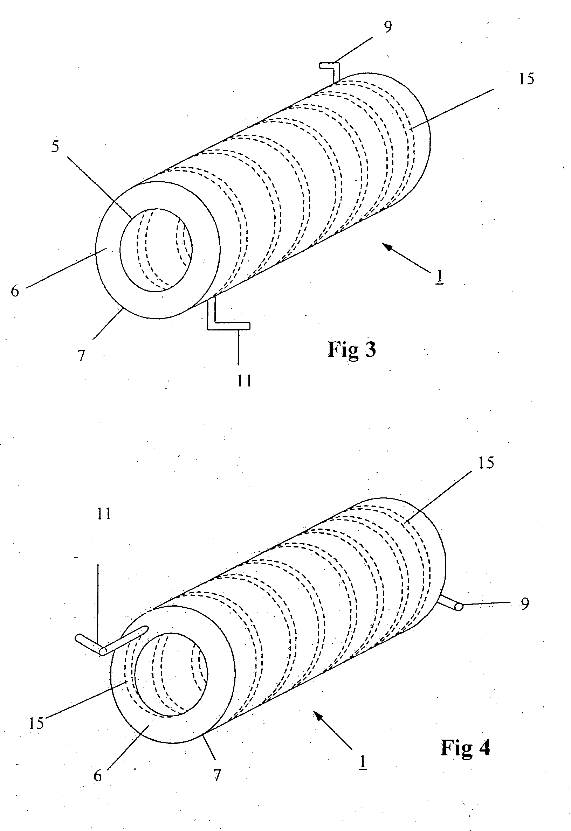

Figure 3 is a perspective view of the conduit of Figure 1;
Figure 4 is a perspective view of a conduit according to an alterative embodiment of the invention; and

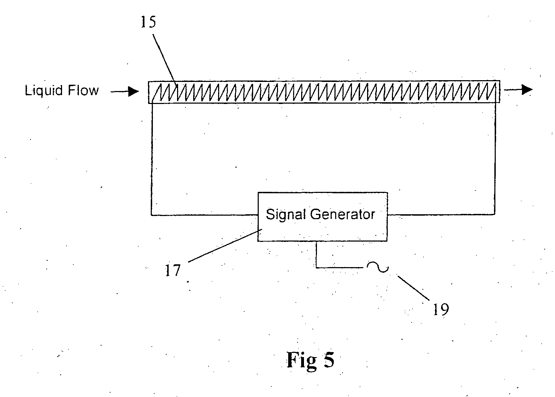

Figure 5 shows a fluid conveying apparatus, according to yet another embodiment of the invention.

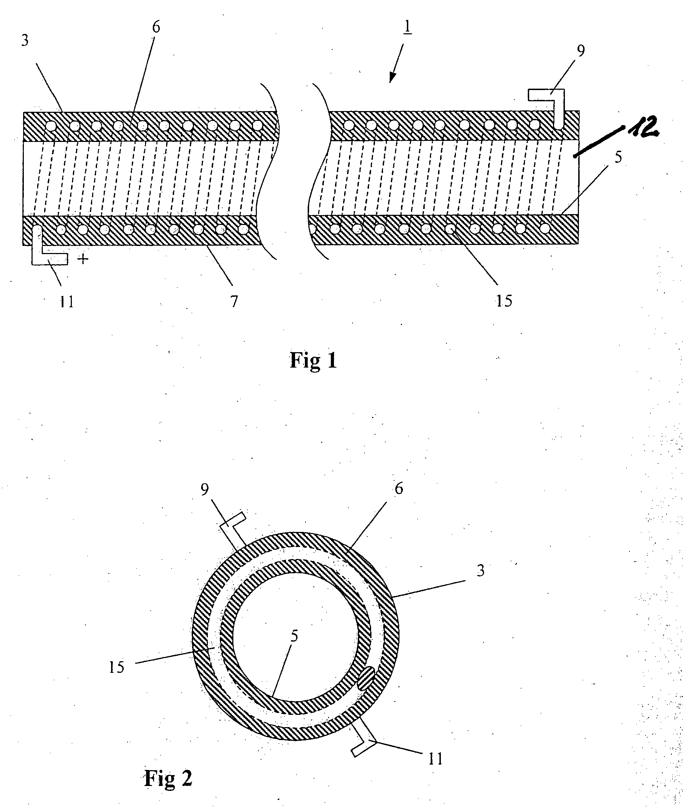

Referring to Figure 1, the fluid conveying conduit 1 comprises a tube 3 having a tube wall 6. The tube 3 is an elongate, cylindrical tube, although the tube 3 may be any fluid conveying conduit, of any suitable shape, for example a tube of square cross section, and may convey liquids, gases, powders, or any fluid medium exhibiting the characteristics of a fluid. The present invention is also applicable to fluid conveying conduits of varying size. For example, the conduit may be a beer line or water pipe, of relatively small diameter, or a gas pipe, or oil pipeline having a much larger diameter.

The tube 3 comprises an outer surface 7 and an inner surface 5. The inner surface 5 of the tube 3 defines a fluid channel 12 for carrying a fluid. The tube wall 6 may be formed of a rigid, or flexible material, depending on its application, for example a rigid tube may be more suitable for a water pipe, whereas a flexible pipe may be required for use as in conveying beverages such as beer.

For application as a beer line, the tube is formed from flexible PVC, although it is understood that the tube 3 may be formed of any material suitable for the fluid to be conveyed and the environment in which the conduit is to be utilised. The diameter of the inner surface 5, and the thickness of the wall 6, may be varied, and preselected accord to the environment and application for which the conduit is to be used.

To prevent deposition of calcium, limescale, bacteria, yeast, or other contaminants, on the inner surface 5, an electro-magnetic coil 15 is provided. The coil 15 extends around the fluid channel 12 and along the length of the tube 3. The coil 15 may extend along the entire length of the tube 3, or only along a preselected section, or sections, of the tube 3. The coil 15 shown in the illustrations is a helical coil, and extends around the channel 12 in a helical configuration, although other suitable electro-magnetic coil configurations may also be utilised.

The coil 15 is located between the outer surface 7, and inner surface 5 of the tube 3, encapsulated within the wall 6. The coil 15 is integrated within the tube 3 and integral with the wall 6. The coil 15 is encased within the wall 6 as the tube 3 is formed by extrusion, or during a moulding process. The coil 15 may be formed from any suitable electrically conductive material, for example, a copper or steel wire.

Electrical connections 9 and 11 are provided at either end of the coil 15, for connecting the coil to a signal generator 17. The electrical connections 9 and 11 may comprise extensions of the coil, extending outwardly through the wall 6, form connection points. Alternatively, the electrical connections 9 and 11 may be separate connections members, which extend through the wall 6 to connect with the coil 15, or any other suitable means of connecting the coil 15 to an electrical source.

An electrical signal is provided to the coil 15 by the signal generator 17, to cause the coil 15 to produce a magnetic field. The signal generator 17 converts the electrical supply 19 to an input signal for the coil 15. The input signal may be a pulsed or varying energy input signal, and may have varying frequencies. Specifically, the pulsed or varying energy input signal may comprise a square wave waveform, having varying frequencies. The input signal provided by the signal generator 17 is adapted to effect the cleaning of the tube 3. In particular, the input signal causes the coil 15 to produce a magnetic field which prevents, or minimises deposition of particulates suspended in the fluid within the tube 3 on the inner surface 5.

Encasing the coil 15 within the wall 6 of the tube 3, allows the coil 15 to be located closer to the inner surface 5 of the tube 3. It has been found that by locating the coil 15 closer to the inner surface 5, and consequently closer to the fluid within the tube 3, the cleaning effect of the coil 15 is significantly increased. The cleaning effect of the coil 15 may be maximised by encasing the coil 15 within the wall 6 such that the coil 15 is closer to the inner surface 5 than the outer surface 7, and as close to the inner surface 5 as possible within the constraints of the material from which the tube 3 is formed.

Encasing the coil 15 within the tube 3, also protects the coil 15 from damage. The windings of the coil 15 are able to maintain their configuration, even when the tube 3 is flexed, and movement of the coil 15 relative to the tube 3 is prevented. In addition, it has been found that the coil 15 provides structural reinforcement for the tube 3, which prevents crimping or flattening of the tube 3.

In the illustrated embodiment, the coil 15 is completely encased within the wall 6 of the tube 3.

Any suitable electrical signal may be provided to the coil 15 to effect cleaning of the tube 3. However, it has been found that it is particularly effective to provide an AC signal to the coil 15, which varies between positive and negative on a continual and constantly repetitive scale. The frequency of the signal provided by the signal generator is in a range above audio frequency and below radio frequency.

The signal generator 17 may comprise a free running oscillator emitting a near sawtooth (RAMP) signal. The RAMP signal is fed into a voltage controlled oscillator, which provides a changing square wave configuration, dependant on the input signal from the RAMP generator. This signal, which is varying in frequency, is provided to an output transistor via a resistor, and is then provided to the coil 15 via a capacitor at either end of the coil 15. This configuration ensures a uniform signal configuration.

Therefore, there is provided a fluid conveying conduit, having an integral coil, which improves the efficacy of the cleaning action of the coil, and protects the coil from damage.

It will be appreciated that in further embodiments various modifications to the specific arrangements described above and shown in the drawings may be made. For example, whilst the conduit is described in terms of a beer line, or water pipe, it will be appreciated it may be a conduit for conveying any fluid.

## Claims

1. A fluid conveying apparatus, comprising:
a fluid conveying conduit (1) comprising:
a tube (3) having a tube wall (6), an inner surface (5) and an outer surface (7), the inner surface (5) defining a fluid conveying channel; and
a coil (15) that extends along at least a section of the length of the tube (3), and having electrical connections (9), (11) located at either end of the coil, at least a section of the coil (15) extending around the fluid channel; and
a signal generator connected to the electrical connections for providing an electric signal to the coil, the signal generator and coil being configured and adapted to produce a magnetic field within the fluid channel to prevent deposition of contaminants on the inner surface (5) of the tube (3) from fluid conveyed by the tube (3),
**characterised in that** the tube (3) is formed about the coil (15) by a moulding or extrusion process and the coil is encapsulated within the wall (6) of the tube (3) intermediate the inner surface (5) and outer surface (7), and is integral with the tube wall (6).

2. The fluid conveying apparatus (1) of claim 1, wherein the coil (15) is a helical coil.

3. The fluid conveying apparatus (1) of claim 1 or claim 2, wherein the input signal comprises a square waveform having varying frequencies.

4. A method of preventing contamination of a fluid conveying conduit (1), comprising:
providing a tube (3) for conveying fluid, the tube having a tube wall (6), an inner surface (5) and an outer surface (7), the inner surface defining a fluid conveying channel; and
providing a coil (15) along at least a section of the length of the tube (3), at least a section of the coil extending around the fluid channel, said coil having electrical connections (9), (11) located at either end of the coil;
connecting a signal generator (17) to the electrical connections (9), (11); and
providing an electrical input signal to the coil (15) using the signal generator (17), to cause the coil (15) to generate a magnetic field within the fluid channel to prevent deposition of contaminants on the inner surface (5) of the tube (3) from fluid conveyed by the tube (3);
**characterised in that** the tube (3) is formed about the coil (15) by a moulding or extrusion process and the coil is encapsulated within the wall (6) of the tube (3) intermediate the inner surface (5) and outer surface (7), and is integral with the tube wall (6).

5. The method of claim 4, wherein the electrical signal provided by the signal generator (17) has varying frequencies.

6. The method of claim 5, wherein the input signal comprises a square waveform having varying frequencies.

## Patentansprüche

1. Fluidbeförderungsvorrichtung, umfassend:
eine Fluidbeförderungsleitung (1), die umfasst:
ein Rohr (3) mit einer Rohrwand (6), einer Innenfläche (5) und einer Außenfläche (7), wobei die Innenfläche (5) einen Fluidbeförderungskanal definiert; und
eine Spule (15), die sich entlang mindestens eines Abschnitts der Länge des Rohres (3) erstreckt und elektrische Anschlüsse (9), (11) aufweist, die an beiden Enden der Spule angeordnet sind, wobei sich mindestens ein Abschnitt der Spule (15) um den Fluidkanal erstreckt; und
einen Signalgenerator, der mit den elektrischen Anschlüssen verbunden ist, zum Bereitstellen eines elektrischen Signals für die Spule, wobei der Signalgenerator und die Spule so konfiguriert und ausgelegt sind, dass sie ein Magnetfeld innerhalb des Fluidkanals erzeugen, um Ablagerung von Verunreinigungen auf der Innenfläche (5) des Rohres (3) aus dem Fluid zu verhindern, das durch das Rohr (3) befördert wird,
**dadurch gekennzeichnet, dass** das Rohr (3) durch einen Formgebungs- oder Extrusionsprozess um die Spule (15) ausgebildet ist, und die Spule innerhalb der Wand (6) der Rohres (3) zwischen der Innenfläche (5) und der Außenfläche (7) eingekapselt und aus einem Stück mit der Rohrwand (6) ist.

2. Fluidbeförderungsvorrichtung (1) nach Anspruch 1, wobei die Spule (15) eine spiralförmige Spule ist.

3. Fluidbeförderungsvorrichtung (1) nach Anspruch 1 oder 2, wobei das Eingangssignal eine Rechteckwellenform mit veränderlichen Frequenzen umfasst.

4. Verfahren zur Verhinderung von Verunreinigung einer Fluidbeförderungsleitung (1), umfassend:
Bereitstellen eines Rohres (3) zum Befördern von Fluid, wobei das Rohr eine Rohrwand (6), eine Innenfläche (5) und eine Außenfläche (7) aufweist, wobei die Innenfläche einen Fluidbeförderungskanal definiert; und
Bereitstellen einer Spule (15) entlang mindestens eines Abschnitts der Länge des Rohres (3), wobei sich mindestens ein Abschnitt der Spule um den Fluidkanal erstreckt, wobei die Spule elektrische Anschlüsse (9), (11) aufweist, die an beiden Enden der Spule angeordnet sind;
Verbinden eines Signalgenerators (17) mit den elektrischen Anschlüssen (9), (11); und
Bereitstellen eines elektrischen Eingangssignals für die Spule (15) unter Verwendung des Signalgenerators (17), um die Spule (15) zu veranlassen, ein Magnetfeld innerhalb des Fluidkanals erzeugen, um Ablagerung von Verunreinigungen auf der Innenfläche (5) des Rohres (3) aus dem Fluid zu verhindern, das durch das Rohr (3) befördert wird;
**dadurch gekennzeichnet, dass** das Rohr (3) durch einen Formgebungs- oder Extrusionsprozess um die Spule (15) ausgebildet ist, und die Spule innerhalb der Wand (6) der Rohres (3) zwischen der Innenfläche (5) und der Außenfläche (7) eingekapselt und aus einem Stück mit der Wand (6) des Rohres ist.

5. Verfahren nach Anspruch 4, wobei das elektrische Signal, das vom Signalgenerator (17) bereitgestellt wird, veränderliche Frequenzen aufweist.

6. Verfahren nach Anspruch 5, wobei das Eingangssignal eine Rechteckwellenform mit veränderlichen Frequenzen umfasst.

## Revendications

1. Appareil de transport de fluide, comprenant :
une conduite de transport de fluide (1), comprenant :
un tube (3) comprenant une paroi de tube (6), une surface intérieure (5) et une surface extérieure (7), la surface intérieure (5) définissant un canal de transport de fluide ; et
une bobine (15) qui s'étend le long d'au moins une section de la longueur du tube (3) et comprend des connexions électriques (9), (11) situées aux deux extrémités de la bobine, au moins une section de la bobine (15) s'étendant autour du canal de fluide ; et
un générateur de signaux connecté aux connexions électriques pour fournir un signal électrique à la bobine, le générateur de signaux et la bobine étant configurés et conçus pour produire un champ magnétique dans le canal de fluide afin d'empêcher le dépôt de contaminants sur la surface intérieure (5) du tube (3) à partir du fluide transporté par le tube (3),
**caractérisé en ce que** le tube (3) est formé autour de la bobine (15) par un procédé de moulage ou d'extrusion et la bobine est encapsulée dans la paroi (6) du tube (3) entre la surface intérieure (5) et la surface extérieure (7), et est intégrée dans la paroi du tube (6).

2. Appareil de transport de fluide (1) selon la revendication 1, dans lequel la bobine (15) est une bobine hélicoïdale.

3. Appareil de transport de fluide (1) selon la revendication 1 ou la revendication 2, dans lequel le signal d'entrée comprend une forme d'onde carrée ayant des fréquences variables.

4. Procédé de prévention de la contamination d'une conduite de transport de fluide (1), comprenant :
la mise à disposition d'un tube (3) pour le transport d'un fluide, le tube comprenant une paroi de tube (6), une surface intérieure (5) et une surface extérieure (7), la surface intérieure (5) définissant un canal de transport de fluide ; et
la disposition d'une bobine (15) le long d'au moins une section de la longueur du tube (3), au moins une section de la bobine s'étendant autour du canal de fluide, ladite bobine comprenant des connexions électriques (9), (11) situées aux deux extrémités de la bobine ;
la connexion d'un générateur de signaux (17) aux connexions électriques (9), (11) ; et
la fourniture d'un signal d'entrée électrique à la bobine (15) en utilisant le générateur de signaux (17) pour amener la bobine (15) à générer un champ magnétique dans le canal de fluide afin d'empêcher le dépôt de contaminants sur la surface intérieure (5) du tube (3) à partir du fluide transporté par le tube (3) ;
**caractérisé en ce que** le tube (3) est formé autour de la bobine (15) par un procédé de moulage ou d'extrusion et la bobine est encapsulée dans la paroi (6) du tube (3) entre la surface intérieure (5) et la surface extérieure (7), et est intégrée dans la paroi du tube (6).

5. Procédé selon la revendication 4, dans lequel le signal électrique fourni par le générateur de signaux (17) a des fréquences variables.

6. Procédé selon la revendication 5, dans lequel le signal d'entrée comprend une forme d'onde carrée ayant des fréquences variables.
